# EUROPEAN PATENT APPLICATION

(11) **EP 2 487 147 A1**
(43) Date of publication of application: **15.08.2012**
(21) Application number: 10822098.9
(22) Date of filing: 07.10.2010
(51) Int. Cl.: C04B 41/87, C01B 31/02

(54) **METHOD FOR PRODUCING CARBON MATERIAL COATED WITH SILICON CARBIDE**

(30) Priority: 09.10.2009 JP 2009235721
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/067665
(87) International publication number: WO 2011/043428

(57) **Abstract**

A method of producing a silicon carbide-coated carbon material that comprises heating, under a non-oxidizing atmosphere, a carbon substrate and an amorphous inorganic ceramic material obtained by heating a non-melting solid silicone, thereby forming a silicon carbide coating film on the carbon substrate. A silicon carbide-coated carbon material that exhibits excellent heat resistance and has a uniform silicon carbide coating can be obtained.

## Description

### Technical Field

The present invention relates to a method of producing a material in which a carbon substrate is coated with silicon carbide.

### Background Art

Materials composed of a carbon substrate having a coating of silicon carbide formed on the surface are chemically stable at both normal temperatures and high temperatures, and also exhibit excellent mechanical strength at high temperature, and they are therefore used as high-temperature materials. In recent years, in the field of semiconductor production, high-purity silicon carbide-coated carbon materials having excellent heat resistance and creep resistance have started to be used as boards or process tubes or the like within steps for conducting heat treatments of semiconductor wafers, or conducting thermal diffusion of trace elements within semiconductor wafers.

Known methods of producing silicon carbide-coated carbon materials include a method in which a silicon powder is brought into contact with the surface of a graphite substrate, and heating is then performed to initiate a chemical reaction and form a silicon carbide coating (Patent Document 1), and a method in which silicon carbide is coated onto the surface of a carbon substrate by a chemical vapor deposition method (CVD method) (Patent Document 2). However, in the method disclosed in Patent Document 1, residual raw material silicon remains on the graphite substrate, which can have an adverse effect on the heat resistance of the obtained silicon carbide-coated carbon material. Further, in the method disclosed in Patent Document 2, because the deposition has an associated directionality, the method is not suitable for achieving a uniform coating on the surface of a carbon substrate having a complex shape.

### Prior Art Documents

### Patent Documents

Patent Document 1: JP 10-236893 A
Patent Document 2: JP 2002-37684 A

### Summary of the Invention

### Problems Invention Aims to Solve

An object of the present invention is to address the problems associated with the conventional technology described above, and provide a method of producing a silicon carbide-coated carbon material that is simple, can form a uniform silicon carbide coating film across an entire substrate, and yields a silicon carbide-coated carbon material that exhibits excellent heat resistance.

### Means for Solution of the Problems

As a result of intensive investigation aimed at addressing the problems described above, the inventors of the present invention discovered that the above object could be achieved by treating an amorphous inorganic ceramic material obtained by heating a non-melting solid silicone in a non-oxidizing atmosphere at a temperature of 400 to 1,500°C and a carbon substrate under specific conditions.

In other words, the present invention provides a method of producing a silicon carbide-coated carbon material comprising a carbon substrate and a silicon carbide coating film that coats the carbon substrate, wherein the method comprises:
heating an amorphous inorganic ceramic material, which comprises silicon, carbon and oxygen, has an average elemental ratio between the silicon, carbon and oxygen that is represented by a composition formula (1) shown below:

   Si₁CₐO_{b} (1)

   (wherein a is a number that satisfies 0.5≤a≤3.0 and b is a number that satisfies 1.0≤b≤4.0), has a siloxane skeleton composed of Si-O-Si bonds, and has a hydrogen mass fraction of 0 to 0.5% by mass, together with the carbon substrate, in a non-oxidizing atmosphere at a temperature exceeding 1,500°C but not higher than 2,200°C.

### Effects of the Invention

According to the production method of the present invention, the starting raw material is an amorphous inorganic ceramic material, and is therefore easy to handle.
The silicon carbide coating formed by the production method of the present invention is produced by a reaction between generated silicon monoxide and the carbon substrate, and therefore the adhesion to the carbon substrate is excellent. Further, because there is no directionality associated with the formation of the silicon carbide on the carbon substrate, the silicon carbide coating is formed with a uniform thickness across the entire carbon substrate. Accordingly, detachment at the interface between the carbon substrate and the silicon carbide is unlikely to occur.
Furthermore, the silicon carbide-coated carbon material contains no metallic silicon or the like as a residual component, and therefore exhibits excellent heat resistance.

A more detailed description of the present invention is presented below. In this description, "room temperature" refers to the ambient temperature, which can typically change within a range from 10 to 35°C.

### Embodiments of Carrying Out the Invention

In this description, a "solid silicone" describes a silicone that is solid at room temperature. A silicone is an organopolysiloxane-based polymer material.

The term "silicone resin" describes an organopolysiloxane having a three dimensional structure which comprises branched siloxane units (namely, trifunctional siloxane units known as T units and/or tetrafunctional siloxane units known as Q units) as essential siloxane units. In some cases, the silicone resin may also include linear siloxane units known as D units and/or monofunctional siloxane units known as M units that are positioned at molecular chain terminals.

Furthermore, in this description, when a polymer material is described as "non-melting", this means the material has no softening point. Accordingly, a non-melting polymer material does not melt as the temperature is raised, but rather undergoes thermal decomposition. Accordingly, a "non-melting solid silicone" describes a solid silicone that has no softening point, and a "non-melting silicone resin" describes a silicone resin that has no softening point.

In this description, the "softening point" refers to a temperature measured in accordance with the softening point test method (ring and ball method) prescribed in JIS K 2207.

### [Carbon Substrate]

The carbon substrate used in the present invention is generally a porous solid material composed of graphite or amorphous carbon and having a predetermined shape and dimensions. There are no particular limitations on the method used for producing the carbon substrate, and for example, the carbon substrate can usually be obtained by subjecting a sinterable carbonaceous powder (amorphous carbon powder) to cold isostatic pressing (CIP) into a desired shape such as an angled block or a circular cylindrical block, and then performing firing, followed by graphitization if required. The thus obtained block can then be subjected to machining such as cutting or grinding to obtain the desired final shape and dimensions. Further, the carbon substrate can also be obtained by subjecting a sinterable carbonaceous powder to extrusion molding and firing, and then performing graphitization if required to obtain a molded item having the desired shape and dimensions. The carbon substrate obtained in this manner is generally a porous material having a microporous structure.

### [Amorphous Inorganic Ceramic Material]

The amorphous inorganic ceramic material used in the production method of the present invention acts as a supply source of silicon monoxide, and is as described above. Namely, the amorphous inorganic ceramic material comprises silicon, carbon and oxygen, has a siloxane skeleton composed of Si-O-Si bonds, has an average elemental ratio between the silicon, carbon and oxygen that is represented by a composition formula (1) shown below:

Si₁CₐO_{b} (1)

(wherein a is a number that satisfies 0.5≤a≤3.0 and b is a number that satisfies 1.0≤b≤4.0), and has a hydrogen mass fraction of 0 to 0.5% by mass, and preferably 0 to 0.1% by mass.

The amorphous inorganic ceramic material may also include other elements besides silicon, carbon, oxygen and hydrogen, provided the inclusion of these other elements does not impair the object and effects of the present invention, but the amount of these other elements is preferably not more than 2.0% by mass, and more preferably 0 to 1.0% by mass.

As described in detail in JP 2008-81396 A, the amorphous inorganic ceramic material can be obtained, for example, by heating a non-melting solid silicone in a non-oxidizing atmosphere at a temperature of 400 to 1,500°C.

Examples of the non-melting solid silicone include non-melting silicone resins and cured products of curable silicone compositions. According to the method of the present invention, a high-purity silicon carbide coating is generally obtained, and particularly in the semiconductor field, a coating containing minimal detrimental impurity elements such as Fe, CR, Ni, Al, Ti, Cu, Na, Zn, Ca, ZR, Mg and B can be obtained. In this regard, the use of a non-melting silicone resin or a cured product of an organic peroxide-curable silicone composition or a radiation-curable silicone composition as the non-melting solid silicone is particularly effective.

### - Non-Melting Silicone Resin -

The non-melting silicone resin is obtained by subjecting a meltable silicone resin to a non-melting treatment. This non-melting treatment can be performed, for example, by treating the meltable silicone resin with an inorganic acid. By performing this non-melting treatment, the silicone resin becomes non-meltable in the subsequent heating treatment performed under a non-oxidizing atmosphere.

In this description, a "meltable silicone resin" describes a silicone resin that is a solid at room temperature, but has a softening point. As the temperature is raised, the silicone resin either melts or softens at the softening point.

Examples of the inorganic acid used in the non-melting treatment described above include gaseous acids such as hydrogen chloride gas, and liquid acids such as hydrochloric acid and sulfuric acid. The type and concentration of the inorganic acid can be selected appropriately in accordance with the amount of phenyl groups contained within the silicone resin used as the raw material. In those cases where the amount of phenyl groups within the silicone resin is low, for example in those cases where the ratio of phenyl groups relative to the combined total of organic groups and hydroxyl groups bonded to silicon atoms within the silicone resin (hereinafter, this ratio is referred to as the "phenyl group content") is within a range from 0 to 5 mol%, the use of hydrochloric acid with a concentration of not more than 50% by mass is preferred, the use of hydrochloric acid with a concentration of not more than 30% by mass is more preferred, and the use of hydrochloric acid with a concentration of 10 to 25 % by mass is particularly desirable. In contrast, in those cases where the phenyl group content within the silicone resin is high, for example in cases where the phenyl group content exceeds 5 mol% but is not more than 25 mol%, the use of hydrogen chloride gas or concentrated sulfuric acid or the like is preferred. By using such an acid, the non-melting treatment reaction can proceed rapidly even in those cases where the large amount of phenyl groups causes significant steric hindrance.

Examples of the meltable silicone resin include silicone resins represented by an average composition formula (2) shown below:

R¹ₘR²ₙ(OR³)ₚ(OH)_{q}SiO_{(4-m-n-p-q)/2} (2)

wherein each R¹ independently represents a hydrogen atom or an identical or different monovalent hydrocarbon group other than an aryl group which may comprise a carbonyl group, R² represents a phenyl group, R³ represents identical or different monovalent hydrocarbon groups of 1 to 4 carbon atoms, m represents a number that satisfies 0.1≤m≤2, n represents a number that satisfies 0≤n≤2, p represents a number that satisfies 0≤p≤1.5, and q represents a number that satisfies 0≤q≤0.35, provided that p+q>0 and 0.1≤+m+n+p+q≤2.6.

Each of the R¹ groups preferably represents, independently, either a hydrogen atom, or a monovalent hydrocarbon group other than an aryl group, which is the same as, or different from, the other R¹ groups, may comprise a carbonyl group, and contains from 1 to 8 carbon atoms. Specific examples of R¹ include alkyl groups such as a methyl group, ethyl group, propyl group, butyl group, pentyl group and hexyl group; cycloalkyl groups such as a cyclopentyl group and cyclohexyl group; alkenyl groups such as a vinyl group, allyl group, propenyl group, isopropenyl group and butenyl group; and acyl groups such as an acryloyl group and methacryloyl group. From the viewpoint of ease of availability of the raw material, R¹ is preferably a hydrogen atom, methyl group, ethyl group or vinyl group.

The aforementioned m is a number that satisfies 0.1≤m≤2, but m is preferably not more than 1.5, and m is preferably not less than 0.1, and more preferably 0.5 or greater. Provided m satisfies this range, mass loss during the inorganic ceramization performed by heating can be more readily suppressed.

The R² group is a phenyl group, and has the function of increasing the melting point or softening point of the meltable silicone resin, and can therefore be used to adjust the viscosity and fluidity of the silicone resin to appropriate levels.

The aforementioned n is a number that satisfies 0≤n≤2, but n is preferably not more than 1.5, and n is preferably not less than 0.05, and more preferably 0.1 or greater. Provided n satisfies this range, the phenyl group content is not too high, and mass loss during the inorganic ceramization performed by heating the non-melting silicone resin can be more readily suppressed.

Specific examples of R³ include alkyl groups of 1 to 4 carbon atoms such as a methyl group, ethyl group, propyl group, isopropyl group, butyl group and isobutyl group, and a methyl group is particularly preferred industrially. If R³ is a monovalent hydrocarbon group containing 5 or more carbon atoms, then the reactivity of the group represented by OR³ tends to be poor, which means the mass loss tends to be large during the inorganic ceramization performed by heating the non-melting silicone resin.

The aforementioned p indicates the amount of hydrocarbyloxy groups represented by OR³, and is a number that satisfies 0≤p≤1.5, but p is preferably not more than 1.2, and p is preferably not less than 0.05, and more preferably 0.1 or greater. Provided p satisfies this range, the hydrocarbyloxy group content within the silicone resin is not too high, and the molecular weight of the silicone resin can be more easily maintained at a high value. Accordingly, mass loss caused by elimination of silicon and carbon during the inorganic ceramization performed by heating the non-melting silicone resin can be suppressed.

The aforementioned q indicates the amount of silanol groups and is a number that satisfies 0≤q≤0.35, is preferably a number that satisfies 0≤q≤0.3, and is most preferably 0. The value of q represents the small amount of residual silanol groups retained within the meltable silicone resin during production. Provided the value of q falls within the above range, the reactivity of the silanol groups can be suppressed for the meltable silicone resin as a whole, and the storage stability of the meltable silicone resin can be improved.

The value of p+q indicates the combined amount of hydrocarbyloxy groups and silanol groups, wherein p+q>0. The hydrocarbyloxy groups (preferably alkoxy groups) and/or silanol groups are necessary for forming cross-linking via hydrolysis-condensation reactions during the non-melting treatment described below. The combination of these groups preferably represents 1 to 15% by mass, and more preferably 2 to 10% by mass, of the meltable silicone resin.
The value of m+n+p+q is a number that satisfies: 0.1≤m+n+p+q ≤2.6. Provided the value of m+n+p+q satisfies this range, mass loss during the inorganic ceramization performed by heating the non-melting silicone resin can be better suppressed.

The molecular weight of the meltable silicone resin is preferably such that the resin has an appropriate softening point as described above. For example, the weight-average molecular weight measured using gel permeation chromatography (hereinafter abbreviated as GPC) and referenced against polystyrene standards is preferably at least 600, and is more preferably within a range from 1,000 to 10,000.

There are no particular limitations on the meltable silicone resin, provided it satisfies the conditions described above, although a silicone resin that includes methyl groups within the molecule is preferred. The meltable silicone resin may be either a single resin, or a combination of two or more resins with different molecular structures or different proportions of the various siloxane units within the resins.

These types of meltable silicone resins can be produced by conventional methods. For example, the target meltable silicone resin can be produced by conducting a cohydrolysis, if required in the presence of an alcohol of I to 4 carbon atoms, of the organochlorosilanes that correspond with the siloxane units incorporated within the structure of the target resin, using a ratio between the organochlorosilanes that reflects the ratio between the corresponding siloxane units, while removing the by-product hydrochloric acid and low boiling point components. Furthermore, in those cases where alkoxysilanes, silicone oils or cyclic siloxanes are used as the starting raw materials, the target silicone resin can be obtained by using an acid catalyst such as hydrochloric acid, sulfuric acid or methanesulfonic acid, adding water to effect the hydrolysis if required, and following completion of the polymerization reaction, removing the acid catalyst and low boiling point components.

### - Cured Product of Curable Silicone Composition -

A cured product of a curable silicone composition can also be used as the non-melting solid silicone used as a starting raw material in the above production method.
This type of curable silicone composition can employ a conventional composition. Specific examples thereof include organic peroxide-curable, addition-curable, radiation-curable and condensation-curable silicone compositions.
Examples of radiation-curable silicone compositions include ultraviolet light-curable silicone compositions and electron beam-curable silicone compositions.

Examples of organic peroxide-curable silicone compositions include silicone compositions that undergo curing via a radical polymerization, in the presence of an organic peroxide, of a linear organopolysiloxane having alkenyl groups such as vinyl groups at a molecular chain terminal (either at one terminal or at both terminals), or at non-terminal positions within the molecular chain, or at both of these positions.
Examples of ultraviolet light-curable silicone compositions include silicone compositions that undergo curing as a result of the energy of ultraviolet light having a wavelength of 200 to 400 nm. In this case, there are no particular limitations on the curing mechanism. Specific examples of these compositions include acrylic silicone-based silicone compositions comprising an organopolysiloxane containing acrylic groups or methacrylic groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat-curable, addition reaction-type compositions, and cationic polymerization-based silicone compositions comprising an organopolysiloxane containing epoxy groups, and an onium salt catalyst, and any of these compositions can be used as an ultraviolet light-curable silicone composition.
Examples of electron beam-curable silicone compositions that can be used include any of the silicone compositions that are cured by a radical polymerization that is initiated by irradiating an organopolysiloxane containing radical polymerizable groups with an electron beam.
Examples of addition-curable silicone compositions include silicone compositions that are cured by reacting an aforementioned linear organopolysiloxane having alkenyl groups with an organohydrogenpolysiloxane (via a hydrosilylation addition reaction) in the presence of a platinum group metal-based catalyst.
Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

Each of the above reactive silicone compositions is described below in detail.

### - Organic Peroxide-Curable Silicone Compositions

Specific examples of organic peroxide-curable silicone compositions include compositions comprising:
(a) an organopolysiloxane containing at least two alkenyl groups bonded to silicon atoms,
(b) an organic peroxide, and, as an optional component
(c) an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### -- Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25°C through to natural rubber-type organopolysiloxanes can be used as the component (a), but the average polymerization degree is preferably within a range from 50 to 20,000, more preferably from 100 to 10,000, and still more preferably from 100 to approximately 2,000. Further, from the viewpoint of ease of availability of the raw material, the organopolysiloxane of the component (a) is preferably basically a linear structure with no branching, in which the molecular chain is composed of repeating diorganosiloxane units (R⁴₂SiO_{2/2} units) and both molecular chain terminals are blocked with triorganosiloxy groups (R⁴₃SiO_{1/2}) or hydroxydiorganosiloxy groups ((HO)R⁴₂SiO_{1/2} units), or a cyclic structure with no branching in which the molecular chain is composed of repeating diorganosiloxane units, although the structure may partially include some branched structures such as trifunctional siloxane units or SiO₂ units. In the above description, R⁴ is as defined below within the description of formula (3).

Examples of organopolysiloxanes that can be used as the component (a) include organopolysiloxanes having at least two alkenyl groups within each molecule, as represented by an average composition formula (3) shown below:

R⁴ₐSiO_{(4-a)/2} (3)

wherein R⁴ represents identical or different, unsubstituted or substituted monovalent hydrocarbon groups of 1 to 10 carbon atoms, and preferably 1 to 8 carbon atoms, 50 to 99 mol% of the R⁴ groups are alkenyl groups, and a represents a positive number within a range from 1.5 to 2.8, preferably from 1.8 to 2.5, and more preferably from 1.95 to 2.05.

Specific examples of R⁴ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, including a chloromethyl group, chloropropyl group, bromoethyl group, trifluoropropyl group and cyanoethyl group, although from the viewpoint of achieving high purity, the R⁴ groups are preferably composed solely of hydrocarbon groups.

In this case, at least two of the R⁴ groups represent alkenyl groups (and in particular, alkenyl groups that preferably contain from 2 to 8 carbon atoms, and more preferably from 2 to 6 carbon atoms). The alkenyl group content among the total of all the organic groups bonded to silicon atoms (that is, among all the unsubstituted and substituted monovalent hydrocarbon groups represented by R⁴ within the above average composition formula (3)) is preferably within a range from 50 to 99 mol%, and more preferably from 75 to 95 mol%. In those cases where the organopolysiloxane of the component (a) has a linear structure, these alkenyl groups may be bonded solely to silicon atoms at the molecular chain terminals, solely to non-terminal silicon atoms within the molecular chain, or to both these types of silicon atoms.

### -- Component (b)

The component (b) is an organic peroxide that is used as a catalyst for accelerating the cross-linking reaction of the component (a) in the organic peroxide-curable organopolysiloxane composition. Any conventional organic peroxide can be used as the component (b), provided it is capable of accelerating the cross-linking reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although this is not an exhaustive list.

The amount added of the component (b) must be an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount added of the component (b) is less than 0.1 parts by mass per 100 parts by mass of the component (a), then the time required for curing lengthens, which is economically undesirable. Further, if the amount added exceeds 10 parts by mass per 100 parts by mass of the component (a), then foaming caused by the component (b) tends to occur, and the strength and heat resistance of the cured reaction product tend to be adversely affected.

### -- Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Even when only the component (a) is used, curing can be achieved by adding the component (b) and heating, but by also adding the component (c), because the reaction with the component (a) proceeds readily, curing can be performed at a lower temperature and within a shorter period of time than the case where only the component (a) is used. There are no particular limitations on the molecular structure of the component (c), and conventionally produced linear, cyclic, branched, or three dimensional network (resin-like) organohydrogenpolysiloxanes can be used as the component (c). In those cases where the component (c) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (c).

Examples of the component (c) include organohydrogenpolysiloxanes represented by an average composition formula (4) shown below:

R⁵_{b}H_{c}SiO_{(4-b-c)/2} (4)

wherein R⁵ represents identical or different, unsubstituted or substituted monovalent hydrocarbon groups containing no aliphatic unsaturated bonds and containing 1 to 10 carbon atoms, and preferably 1 to 8 carbon atoms, and b and c represent positive numbers that preferably satisfy 0.7≤b≤2.1, 0.001≤c≤1.0 and 0.8≤b+c≤3.0, and more preferably satisfy 1.0≤b≤2.0, 0.01≤c≤1.0 and 1.5≤b+c≤2.5.
Examples of R⁵ include the same groups as those described above for R⁴ within the above average composition formula (3) (but excluding the alkenyl groups).

Specific examples of organohydrogenpolysiloxanes represented by the above average composition formula (4) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, ethylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (c) is arbitrary, but is preferably within a range from 0 to 100 parts by mass, and more preferably from 0 to 50 parts by mass, per 100 parts by mass of the component (a). If the amount added of the component (c) exceeds 100 parts by mass per 100 parts by mass of the component (a), then foaming caused by the component (c) tends to occur, and the strength and heat resistance of the cured reaction product tend to be adversely affected.

### - Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### -- Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw material, the organopolysiloxane of the component (d) is preferably basically either a linear structure with no branching, in which the molecular chain (the main chain) is composed of repeating diorganosiloxane units (R⁴₂SiO_{2/2} units), and both molecular chain terminals are blocked with triorganosiloxy groups (R⁴₃SiO_{1/2}), or a cyclic structure with no branching in which the molecular chain is composed of repeating diorganosiloxane units, although the structure may partially include some branched structures such as trifunctional siloxane units or SiO₂ units. In the above description, R⁴ is the same as defined above in relation to formula (3). In those cases where the organopolysiloxane of the component (d) has a linear structure, the ultraviolet light-reactive groups may exist solely at the molecular chain terminals or solely at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as an epoxy group and hydrosilyl group, and of these, an acryloyl group, methacryloyl group, mercapto group, epoxy group or hydrosilyl group is preferred, and an acryloyl group or methacryloyl group is particularly desirable.

Although there are no particular limitations on the viscosity of the organopolysiloxane, the viscosity at 25°C is preferably within a range from 100 to 1,000,000 mPa·s, more preferably from 200 to 500,000 mPa·s, and still more preferably from 200 to 100,000 mPa·s.

Examples of preferred forms of the component (d) include organopolysiloxanes containing at least two ultraviolet light-reactive groups, represented by either a general formula (5a) shown below:

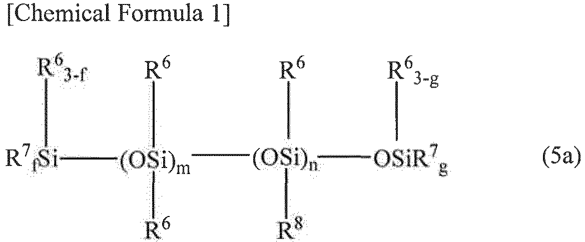

wherein R⁶ represents identical or different, unsubstituted or substituted monovalent hydrocarbon groups that contain no ultraviolet light-reactive groups, R⁷ represents identical or different groups that contain an ultraviolet light-reactive group, R⁸ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2,
or a general formula (5b) shown below:

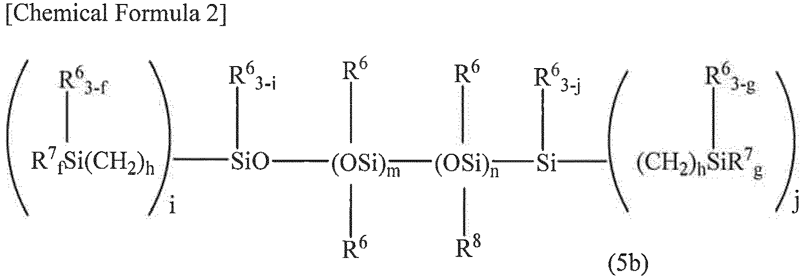

wherein R⁶, R⁷, R⁸, m, n, f and g are as defined above for the general formula (5a), h represents an integer of 2 to 4, and i and j each represents an integer of 1 to 3, provided that fi+gj+n≥2.

In the above general formulas (5a) and (5b), R⁶ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R⁶ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) and/or carbonyl groups or the like within the group structure.

In the above general formulas (5a) and (5b), examples of the ultraviolet light-reactive groups contained within the groups R⁷ and R⁸ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as a mercapto group, epoxy group and hydrosilyl group, and of these, an acryloyl group, methacryloyl group, epoxy group or hydrosilyl group is preferred, and an acryloyl group or methacryloyl group is particularly desirable. Accordingly, the groups comprising an ultraviolet light-reactive group represented by R⁷ and R⁸ are monovalent groups that contain any of the above ultraviolet light-reactive groups, and specific examples of R⁷ and R⁸ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{bis(2-acryloyloxyethoxy}methylsilyl}ethyl group, 2-{(2-acryloyloxyethoxy}dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group, and examples of preferred groups include a 3-methacryloyloxypropyl group, 3-acryloyloxypropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group. R⁷ and R⁸ may be either the same or different, and individual R⁷ and R⁸ groups may be the same as, or different from, other R⁷ and R⁸ groups.

In the above general formulas (5a) and (5b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (5b), h is typically an integer of 2 to 4, and is preferably 2 or 3. Each of i and j represents an integer of 1 to 3, and preferably an integer of 1 or 2. Moreover, as described above, the organopolysiloxanes represented by the above general formulas (5a) and (5b) contain at least two of the above ultraviolet light-reactive groups, and consequently f+g+n≤2 in the formula (5a), and fi+gj+n≥2 in the formula (5b).

Specific examples of organopolysiloxanes represented by the above formulas (5a) and (5b) include the compounds shown below.

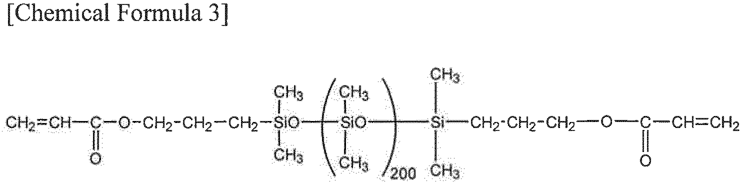

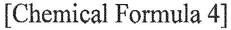

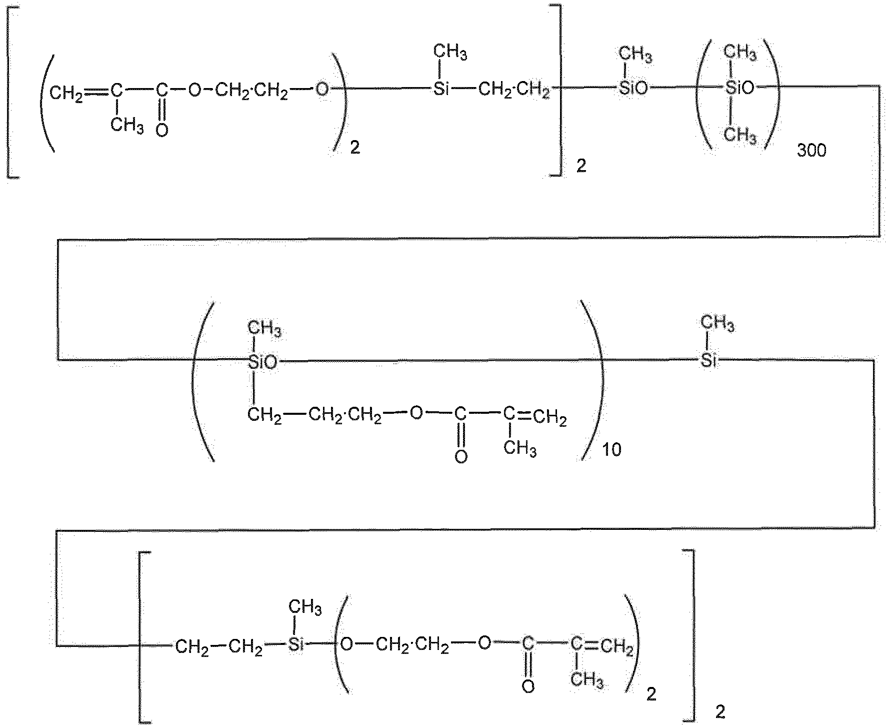

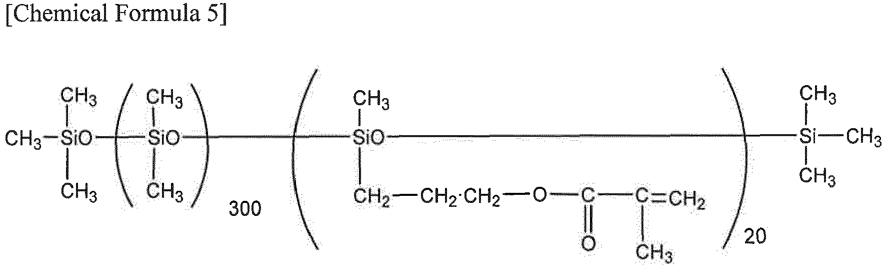

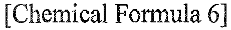

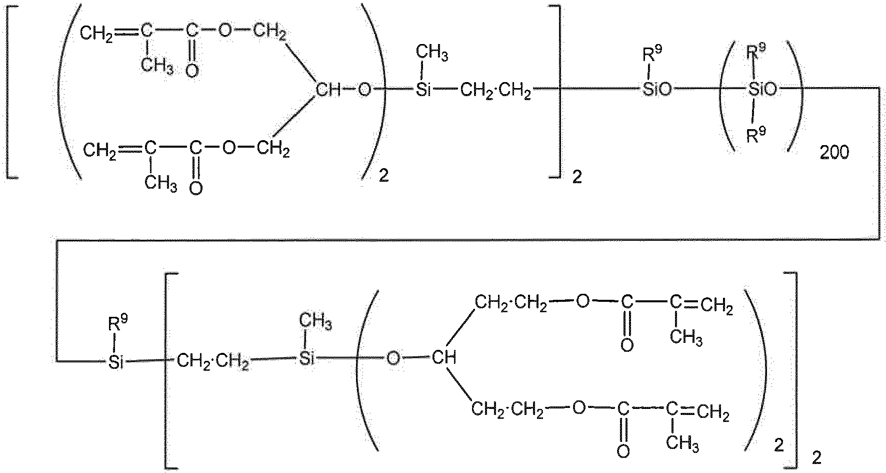

In the above formulas, the R⁹ groups are 90% methyl groups and 10% phenyl groups.

### -- Component (e)

The photopolymerization initiator of the component (e) has the effect of accelerating the photopolymerization of the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1 -propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are particularly desirable. Any one of these photopolymerization initiators may be used alone, or two or more different initiators may be used in combination.

Although there are no particular limitations on the amount added of the component (e), the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### - Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(c) an effective amount of a platinum group metal-based catalyst.

### -- Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fibers becomes difficult, whereas if the viscosity is 1,000,000 mPa·s or greater, then handling becomes difficult. From the viewpoint of ease of availability of the raw material, the organopolysiloxane of the component (f) is basically either a linear structure with no branching, in which the molecular chain (the main chain) is composed of repeating diorganosiloxane units (R¹⁰₂SiO_{2/2} units), and both molecular chain terminals are blocked with triorganosiloxy groups (R¹⁰₃SiO_{1/2}), or a cyclic structure with no branching in which the molecular chain is composed of repeating diorganosiloxane units, although the structure may partially include some branched structures including R¹⁰SiO_{3/2} units and/or SiO_{4/2} units. In the above description, R¹⁰ is the same as defined below within the description of formula (6).

Examples of organopolysiloxanes that can be used as the component (f) include organopolysiloxanes having at least two alkenyl groups within each molecule, as represented by an average composition formula (6) shown below:

R¹⁰₁SiO_{(4-1)/2} (6)

wherein R¹⁰ represents identical or different, unsubstituted or substituted monovalent hydrocarbon groups of 1 to 10 carbon atoms, and preferably 1 to 8 carbon atoms, and 1 represents a positive number that is preferably within a range from 1.5 to 2.8, more preferably from 1.8 to 2.5, and still more preferably from 1.95 to 2.05. Examples of R¹⁰ include the same groups as those described above for R⁴ in the average composition formula (3).

In this case, at least two of the R¹⁰ groups represent alkenyl groups (and in particular, alkenyl groups that preferably contain from 2 to 8 carbon atoms, and even more preferably from 2 to 6 carbon atoms). The alkenyl group content among the total of all the organic groups bonded to silicon atoms (that is, among all the unsubstituted and substituted monovalent hydrocarbon groups represented by R¹⁰ within the above average composition formula (6)) is preferably within a range from 50 to 99 mol%, and more preferably from 75 to 95 mol%. In those cases where the organopolysiloxane of the component (f) has a linear structure, these alkenyl groups may be bonded solely to silicon atoms at the molecular chain terminals or solely to non-terminal silicon atoms within the molecular chain, or may also be bonded to both these types of silicon atoms, but from the viewpoints of the composition curing rate and the physical properties of the resulting cured product and the like, at least one alkenyl group is preferably bonded to a silicon atom at a molecular chain terminal.

### -- Component (g)

The organohydrogenpolysiloxane of the component (g) contains at least two (typically from 2 to 200), and preferably three or more (typically from 3 to 100) hydrogen atoms bonded to silicon atoms (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. An organohydrogenpolysiloxane that is liquid at room temperature (25°C) can be used particularly favorably as the component (g).

Examples of the component (g) include organohydrogenpolysiloxanes represented by an average composition formula (7) shown below.

R¹¹ₚH_{q}SiO_{(4-p-q)/2} (7)

wherein R11 represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤q≤1.0 and 0.8≤p+q≤3.0, and more preferably satisfy 1.0≤p≤2.0, 0.01≤q≤1.0 and 1.5≤p+q≤2.5.
Examples of R¹¹ include the same groups as those described above for R⁴ in the average composition formula (3) (but excluding the alkenyl groups).

Specific examples of organohydrogenpolysiloxanes represented by the above average composition formula (7) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, ethylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (g) must be sufficient to provide from 0.1 to 5.0 mols, preferably from 0.5 to 3.0 mols, and more preferably from 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount added of the component (g) yields an amount of SiH groups that is less than 0.1 mols, then the time required for curing lengthens, which is economically undesirable. Further, if the amount added yields an amount of SiH groups that exceeds 5.0 mols, then foaming caused by a dehydrogenation reaction tends to occur within the curing reaction product, and the strength and heat resistance of the cured reaction product tend to be adversely affected.

### -- Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), but the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount added of the component (h) need only be an effective catalytic quantity, may be suitably increased or decreased in accordance with the desired curing reaction rate, and preferably provides a mass of the platinum group metal relative to the mass of the component (f) that falls within a range from 0.1 to 1,000 ppm, and more preferably from 0.2 to 100 ppm.

### - Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) a hydrolyzable silane and/or a partial hydrolysis-condensation product thereof as an optional component, and
(k) a condensation reaction catalyst as another optional component.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw material, the organopolysiloxane of the component (i) is preferably basically either a linear structure with no branching, in which the molecular chain (the main chain) is composed of repeating diorganosiloxane units (R¹¹₂SiO_{2/2} units), and both molecular chain terminals are blocked with triorganosiloxy groups (R¹¹₃SiO_{1/2}), or a cyclic structure with no branching in which the molecular chain is composed of repeating diorganosiloxane units, although the structure may partially include some branched structures. In the above description, R¹¹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups other than silanol groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-methylvinyloxy group; amino groups such as a dimethylamino group, diethylamino group, butylamino group and cyclohexylamino group; aminoxy groups such as a dimethylaminoxy group and diethylaminoxy group; and amide groups such as an N-ethylacetide group, N-ethylacetamide group and N-methylbenzamide group.

These hydrolyzable groups are preferably positioned at both molecular chain terminals of a linear diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those described above for R⁴ in the average composition formula (3).

Specific examples of the component (i) include the compounds shown below.

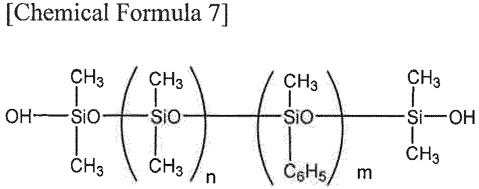

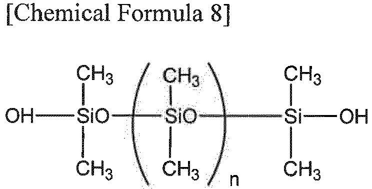

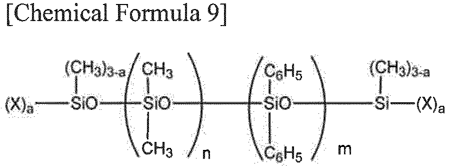

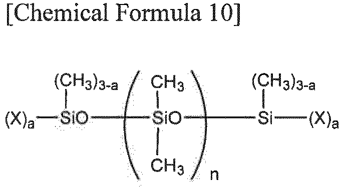

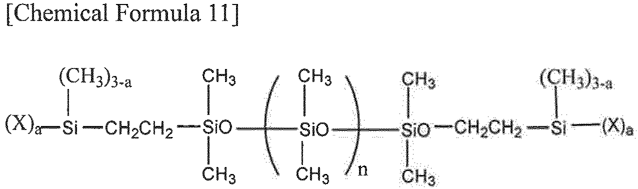

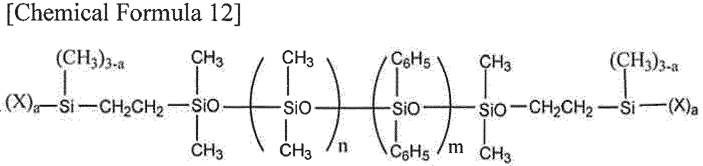

In the above formulas, X represents a hydrolyzable group other than a silanol group, a represents 1, 2 or 3, and each of n and m represents an integer of 1 to 1,000.

Specific examples of the component (i) include dimethylpolysiloxane with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenylpolysiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### -- Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above silane include compounds represented by a formula (8) shown below:

R¹²ᵣSiX₄₋ᵣ (8)

wherein R¹² represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹² include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount added of the component (j) is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### -- Component (j)

The condensation reaction catalyst of the component (j) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range fro 0.01 to 20 parts by mass, and more preferably from 0.1 to 10 parts by mass, per 100 parts by mass of the component (i). If the component (k) is used, then provided the amount satisfies the above range, the composition is economically viable from the viewpoints of the curing time and curing temperature.

### - Curing of Organic Peroxide-Curable Silicone Composition:

Heating the organic peroxide-curable silicone composition causes a radical reaction to proceed and the curing reaction to proceed, thereby curing the organic peroxide-curable silicone composition. In terms of the temperature conditions employed for curing the organic peroxide-curable silicone composition, because the heating temperature used for the curing reaction is dependent on the thickness of the coating, namely, is dependent on the coating amount, although there are no particular limitations, the temperature is preferably within a range from 80 to 300°C, and more preferably from 150 to 250°C. Further, secondary curing may be performed if required, and the temperature during such secondary curing is preferably not less than 120°C, and more preferably within a range from 150 to 250°C. The curing time is preferably within a range from 10 minutes to 48 hours, and more preferable from 30 minutes to 24 hours.

### - Curing of Ultraviolet Light-Curable Silicone Composition:

Irradiating the ultraviolet light-curable silicone composition with ultraviolet light causes the photopolymerization initiator to react and the curing reaction to proceed, thereby curing the ultraviolet light-curable silicone composition. In terms of the ultraviolet light irradiation conditions, because the curing reaction is dependent on the thickness of the coating, namely, is dependent on the coating amount, although there are no particular limitations, curing can typically be conducted by performing the ultraviolet light irradiation using ultraviolet light emitting diodes with an emission wavelength of 365 nm, under conditions including an intensity of 5 to 500 mW/cm², and preferably 10 to 200 mW/cm², and an exposure dose of 0.5 to 100 J/cm² , and preferably 10 to 50 J/cm². Further, secondary curing may also be conducted if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - Curing of Addition-Curable Silicone Composition:

Heating the addition-curable silicone composition causes a hydrosilylation reaction to proceed, thereby curing the addition-curable silicone composition. In terms of the temperature conditions employed, because the curing reaction is dependent on the thickness of the coating, namely, is dependent on the coating amount, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - Curing of Condensation-Curable Silicone Composition:

Heating the condensation-curable silicone composition causes a condensation reaction to proceed, thereby curing the condensation-curable silicone composition. In terms of the temperature conditions employed for curing the condensation-curable silicone composition, because the heating temperature used for the curing reaction is dependent on the thickness of the coating, namely, is dependent on the coating amount, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### [High-Temperature Heat Treatment of Carbon Substrate and Amorphous Inorganic Ceramic]

The carbon substrate and the amorphous inorganic ceramic material described above are together subjected to a heat treatment in a non-oxidizing atmosphere at a temperature exceeding 1,500°C but not higher than 2,200°C.
This heat treatment causes thermal decomposition of the amorphous inorganic ceramic material, thus generating silicon monoxide. It is thought that this silicon monoxide not only reacts with the surface of the carbon substrate, but also penetrates into the interior of the carbon substrate through pores on the surface of the substrate, meaning the reaction generates and deposits silicon carbide on both the substrate surface and within the substrate pores. Accordingly, the formed silicone carbide coating does not simply coat the surface of the substrate, but is rather formed as a continuous coating in which the silicon carbide also penetrates into the pores to at least a certain depth.

Because the carbon substrate and the amorphous inorganic ceramic material are heated together within the atmosphere described above, namely are positioned adjacent to one another during heating, the generated silicon monoxide is able to react at the surface of the carbon substrate.

The heat treatment is performed under a non-oxidizing atmosphere, and preferably under an inert gas atmosphere. Examples of the inert gas include nitrogen gas, argon gas and helium gas, and argon gas is particularly desirable.

Further, the heat treatment is performed at a temperature exceeding 1,500°C but not higher than 2,200°C. This heating temperature is preferably 1,600°C or higher. Furthermore, the heating temperature is preferably not higher than 2,200°C. This heat treatment causes the elimination of silicon monoxide from the amorphous inorganic ceramic material to start, and this silicon monoxide reacts with the carbon substrate to form silicon carbide. If the temperature exceeds 2,200°C, then the decomposition of the carbon substrate becomes overly vigorous, which is undesirable. The end point for the heat treatment can be specified, for example, as the point where the generation of silicon monoxide stops.

### Examples

A more detailed description of the present invention is presented below based on a series of examples, although the present invention is in no way limited by these examples.

### [Example 1]

A more detailed description of the present invention is presented below based on a series of examples and comparative examples, although the present invention is in no way limited by these examples. In the examples, molecular weight values are weight-average molecular weight values measured using GPC and referenced against polystyrene standards. Further, the average elemental ratio between the silicon, carbon and oxygen within the amorphous inorganic ceramic materials is simply referred to as the "elemental ratio".

A meltable silicone resin containing only MeSiO_{3/2} units as siloxane units and also having 5% by mass of silanol groups (molecular weight: 1,000, elemental ratio: SiCO_{1.5}, softening point: 65°C) was placed in an aluminum Petri dish, and was then immersed in a hydrochloric acid solution having a concentration of 20% by mass and left to stand for two days at room temperature. The thus obtained solid was washed with water until the pH of the waste water reached a value of 6, and was then dried by heating at a temperature of approximately 200°C. The thus treated solid was then heated in a non-oxidizing atmosphere in the manner described below. Namely, the solid was placed in an alumina boat and heated under a nitrogen gas atmosphere inside a horizontal tubular furnace by raising the temperature from room temperature to 1,000°C at a rate of temperature increase of 100°C/hour over a period of approximately 10 hours, and was then held at 1,000°C for a further one hour. Subsequently, the solid was cooled to room temperature at a rate of200°C/hour. This process yielded a black amorphous inorganic ceramic material. Calculation of the ratio of the mass lost during heating relative to the mass prior to heating (hereinafter referred to as the "heating loss") by comparing the mass values of the amorphous inorganic ceramic material measured before and after the heating revealed a value of 14.6%.

Measurement of the elemental ratio for the black amorphous inorganic ceramic material by EDX analysis (Energy Dispersive X-ray analysis) using an FE-SEM (Field Emission Scanning Electron Microscope) yielded a result Of SiC_{0.82}O_{1.31}.

Further, measurement of the hydrogen mass fraction relative to the total mass of the amorphous inorganic ceramic material (hereinafter simply referred to as the "hydrogen mass fraction") by FE-SEM EDX analysis yielded a result less than the detection limit of 0.5% by mass.

50 g of the thus obtained amorphous inorganic ceramic material, and a substrate composed of a CIP (Cold Isostatic Press)-treated circular cylindrical carbon molded item (diameter: 15 mm × length: 50 mm × thickness: 2 mm) were placed in a container formed from carbon, which was then placed inside an atmosphere furnace, and under an atmosphere of argon gas, the temperature was raised to 2,000°C over a 20-hour period at a rate of temperature increase of 100°C/hour. The temperature was then held at 2,000°C for two hours, and then cooled to room temperature, yielding a yellow-green solid on both the inner and outer surfaces of the circular cylindrical molded item. The mass of the circular cylindrical material following heating had increased by 5%. Further, the dimensions of the circular cylindrical material following heating were diameter: 15 mm × length: 50 mm × thickness: 2.1 mm.

### - Measurement of Elemental Ratio

A sample of the yellow-green solid surface coating layer (deposited layer) was scraped off the circular cylindrical material, and when this sample was subjected to a carbon analysis using a carbon analyzer (product name: CS-444LS, manufactured by LECO Corporation), the carbon mass ratio was 30.3% by mass. Further, when a similarly collected sample was subjected to an oxygen analysis using an oxygen analyzer (product name: TC436, manufactured by LECO Corporation), the oxygen mass ratio was not more than 0.2% by mass. The elemental ratio was Si₁C_{1.02}.

### [Example 2]

### Materials:

(A) 100 parts by mass of a diorganopolysiloxane containing alkenyl groups within each molecule, represented by a formula shown below:

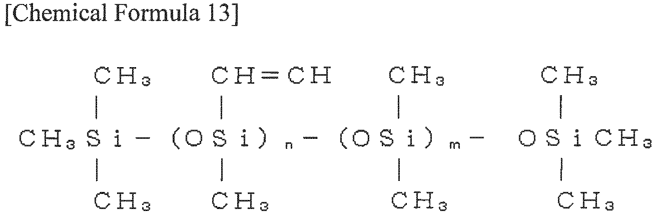

wherein n and m are numbers such that n/m = 4/1 and the viscosity of the siloxane at 25°C is 600 mPa·s.

(B) 0.5 parts by mass of benzoyl peroxide.
(C) 33 parts by mass of a diorganopolysiloxane containing hydrogen atoms bonded to silicon atoms, represented by a formula shown below.

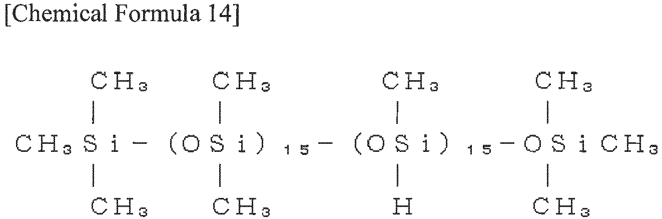

The above components (A) to (C) were combined in a planetary mixer (a registered trademark, a mixing device manufactured by Inoue Manufacturing Co., Ltd.), and were stirred for one hour at room temperature, yielding a curable silicone composition with a viscosity at room temperature of 1,000 mPa·s.

This curable silicone composition was heated at a temperature of approximately 200°C for 30 minutes to obtain a silicone cured product. This silicone cured product was then heated under a non-oxidizing atmosphere in the same manner as that described for example 1, yielding a black amorphous inorganic ceramic material. The heating loss was 16.7%.

Measurement of the elemental ratio of this amorphous inorganic ceramic material by EDX analysis (Energy Dispersive X-ray analysis) using an FE-SEM (Field Emission Scanning Electron Microscope) yielded a result of SiC_{1.3}O_{1.4}.

Further, measurement of the hydrogen mass fraction relative to the total mass of the amorphous inorganic ceramic material (hereinafter simply referred to as the "hydrogen mass fraction") by FE-SEM EDX analysis yielded a result less than the detection limit of 0.5% by mass.

50 g of the thus obtained amorphous inorganic ceramic material, and a substrate composed of a CIP-treated circular cylindrical carbon molded item (diameter: 15 mm × length: 50 mm × thickness: 2 mm) were placed in a container formed from carbon, which was then heated in an atmospheric furnace and subsequently cooled to room temperature in the same manner as that described for example 1, yielding a yellow-green solid on both the inner and outer surfaces of the circular cylindrical molded item. The mass of the circular cylindrical material following heating had increased by 5%. Further, the dimensions of the circular cylindrical material following heating were diameter: 15 mm × length: 50 mm × thickness: 2.1 mm.

### - Measurement of Elemental Ratio

A sample of the yellow-green solid surface coating layer (deposited layer) was scraped off the circular cylindrical material, and when this sample was subjected to a carbon analysis using a carbon analyzer (product name: CS-444LS, manufactured by LECO Corporation), the carbon mass ratio was 30.2% by mass. Further, when a similarly collected sample was subjected to an oxygen analysis using an oxygen analyzer (product name: TC436, manufactured by LECO Corporation), the oxygen mass ratio was not more than 0.2% by mass. The elemental ratio was Si₁C_{1.00}.

### - Analysis of Impurity Elements

With the exception of treating 5 g of the above curable silicone composition inside a carbon container without impregnating the silicone composition into a porous carbon substrate, curing and heat treatment were conducted in the same manner as that described above, yielding a green solid. When this solid was analyzed by ICP emission analysis, the results shown in Table 1 were obtained for the various element content values. A result of "<0.1" indicates that the result was less than the detection limit of 0.1 ppm.

**[Table 1]**

| Analyzed element | Measured value (ppm) |
|---|---|
| Fe | <0.1 |
| CR | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| ZR | <0.1 |
| Mg | <0.1 |
| B | <0.1 |

These results revealed that nickel, chromium, iron and aluminum, which are impurity elements that typically cause problems in the field of semiconductor devices, were all less than the detection limit.

### Industrial Applicability

The silicon carbide-coated carbon material obtained using the method of the present invention exhibits excellent heat resistance and creep resistance, and is therefore very useful as a high-temperature material. For example, the silicon carbide-coated carbon material can be used in the field of semiconductor production, as a material for boards and process tubes that are used within steps for conducting heat treatments of semiconductor wafers, or conducting thermal diffusion of trace elements within semiconductor wafers.

## Claims

1. A method of producing a silicon carbide-coated carbon material comprising a carbon substrate and a silicon carbide coating film that coats the carbon substrate, the method comprising:
heating an amorphous inorganic ceramic material, which comprises silicon, carbon and oxygen, has an average elemental ratio between the silicon, carbon and oxygen that is represented by a composition formula (1) shown below:
Si₁CₐO_{b} (1)
wherein a is a number that satisfies 0.5≤a≤3.0 and b is a number that satisfies 1.0≤b≤4.0, has a siloxane skeleton composed of Si-O-Si bonds, and has a hydrogen mass fraction of 0 to 0.5% by mass, together with the carbon substrate, in a non-oxidizing atmosphere at a temperature exceeding 1,500°C but not higher than 2,200°C.

2. The method according to claim 1, wherein the amorphous inorganic ceramic material is obtained by heating a non-melting solid silicone in a non-oxidizing atmosphere at a temperature of 400 to 1,500°C.

3. The method according to claim 2, wherein the non-melting solid silicone is a non-melting silicone resin obtained by subjecting a meltable silicone resin to a non-melting treatment.

4. The method according to claim 3, wherein the meltable silicone resin is represented by an average composition formula (2) shown below:
R¹ₘR²ₙ(OR³)ₚ(H)_{q}SiO_{(4-m-n-p-q)/2} (2)
wherein each R¹ independently represents a hydrogen atom or a monovalent hydrocarbon group other than an aryl group which may comprise a carbonyl group, R² represents a phenyl group, R³ represents a monovalent hydrocarbon group of 1 to 4 carbon atoms, m represents a number that satisfies 0.1≤m≤2, n represents a number that satisfies 0≤n≤2, p represents a number that satisfies 0≤p≤1.5, and q represents a number that satisfies 0≤q≤0.35, provided that p+q>0 and 0.1≤m+n+p+q≤2.6.

5. The method according to claim 2, wherein the non-melting solid silicone is a cured product of a curable silicone composition.

6. A method of producing a silicon carbide conjugate according to claim 5, wherein the curable silicone composition is an organic peroxide-curable silicone composition or a radiation-curable silicone composition.

7. The method according to claim 5, wherein the curable silicone composition is an organic peroxide-curable silicone composition comprising:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

8. The method according to claim 5, wherein the curable silicone composition is an ultraviolet light-curable silicone composition comprising:
(d) an ultraviolet light-reactive organopolysiloxane, and
(e) a photopolymerization initiator.

9. The method according to claim 8, wherein the ultraviolet light-reactive organopolysiloxane of the component (d) is an organopolysiloxane having at least two ultraviolet light-reactive groups, represented by a general formula (5a) shown below: 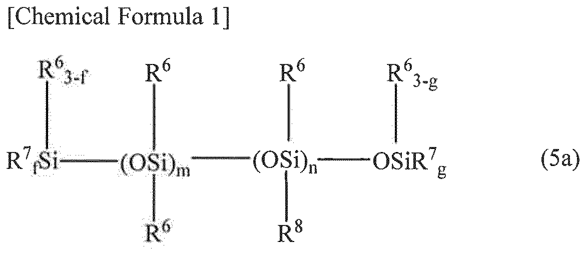 wherein R⁶ represents identical or different, unsubstituted or substituted monovalent hydrocarbon groups that do not have an ultraviolet light-reactive group, R⁷ represents identical or different groups having an ultraviolet light-reactive group, R⁸ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≤2.

10. The method according to claim 9, wherein each of the ultraviolet light-reactive groups is an alkenyl group, alkenyloxy group, acryloyl group, methacryloyl group, mercapto group, epoxy group or hydrosilyl group.

11. The method according to claim 8, wherein the ultraviolet light-reactive organopolysiloxane of the component (d) is an organopolysiloxane having at least two ultraviolet light-reactive groups, represented by a general formula (5b) shown below: 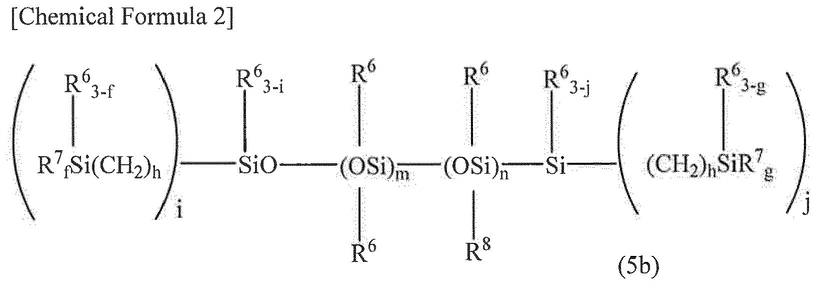 wherein R⁶ represents identical or different, unsubstituted or substituted monovalent hydrocarbon groups that do not have an ultraviolet light-reactive group, R⁷ represents identical or different groups having an ultraviolet light-reactive group, R⁸ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n≥2.

12. The method according to claim 11, wherein each of the ultraviolet light-reactive groups is an alkenyl group, alkenyloxy group, acryloyl group, methacryloyl group, mercapto group, epoxy group or hydrosilyl group.

13. The method according to claim 8, wherein the component (e) is included in an amount of 0.01 to 10 parts by mass per 100 parts by mass of the component (d).

14. The method according to claim 5, wherein the curable silicone composition is an addition-curable silicone composition comprising:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

15. The method according to claim 5, wherein the curable silicone composition is a condensation-curable silicone composition comprising:
(i) an organopolysiloxane containing at least two silanol groups or silicon atom-bonded hydrolyzable groups,
(j) a hydrolyzable silane, a partial hydrolysis-condensation product thereof, or a combination thereof as an optional component, and
(k) a condensation reaction catalyst as another optional component.

16. A silicon carbide-coated carbon material obtained using the method defined in claim 1.
